# EUROPÄISCHE PATENTSCHRIFT

(11) **EP 0 444 477 B1**
(45) Veröffentlichungstag und Bekanntmachung des Hinweises auf die Patenterteilung: **27.07.1994**
(21) Anmeldenummer: 91102062.6
(22) Anmeldetag: 14.02.1991
(51) Int. Cl.: B29B 7/18, B29B 7/74

(54) **Verfahren und Vorrichtung zur Herstellung von Kautschukmischungen**
Method and device for making rubber mixtures
Procédé et dispositif pour la fabrication des mélanges de caoutchouc

(30) Priorität: 28.02.1990 DE 4006194
(43) Veröffentlichungstag der Anmeldung: 04.09.1991
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT); Weckerle, Günter, W-3410 Northeim (DE)
(74) Vertreter: Depmeyer, Lothar

(56) Entgegenhaltungen:
- EP-A- 0 277 558
- DE-A- 2 051 142
- DE-A- 2 518 502
- DE-B- 1 131 389
- US-A- 1 513 733

## Beschreibung

Die Erfindung betrifft ein Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung in einer zweiten Stufe ohne Zwischenlagerung unter Zufügen von reaktiven Zusatzstoffen ebenfalls chargenweise zum Fertigmischen und Abkühlen in einen stempellosen Kneter überführt wird. Die Erfindung betrifft zudem ein solches Verfahren, bei dem die Maximaltemperatur beim Fertigmischenniedriger ist als die beim Grundmischen. Ein solches Verfahren ist aus der EP-A-277 558 bekannt.

Die Erfindung betrifft weiterhin eine Vorrichtung zur Durchführung des vorgenannten Verfahrens.

Es ist verständlich, dass bei dem eingangs erwähnten Verfahren insb. die Kühlung des stempellosen Kneters von Bedeutung ist und natürlich bei einmal gegebenen maschinellen Voraussetzungen die Temperatur des Kühlmediums eine ausschlaggebende Rolle spielen kann.

Der Erfindung liegt die Aufgabe zugrunde, die Kühlung des stempellosen Kneters zu verbessern, ohne hierzu auch die Kneterkonstruktion nennenswert ändern zu müssen.

Zur Lösung dieser Aufgabe wird erfindungsgemäss der Innenraum des stempellosen Kneters mit Luft beschickt, die einen einen Kondensationsniederschlag zumindest praktisch vermeidenden Trockenheitsgrad aufweist. Insb. soll unter diesen Voraussetzungen die Temperatur des Kühlmediums zwischen etwa 0 - 10° C betragen, wobei dann der Trockenheitsgrad so eingestellt sein wird, dass die Luft einen Taupunkt aufweisen muss, der unter der vorerwähnten Temperatur des Kühlmediums liegen muss.

Damit ist es möglich, das sog. Schwitzen der mit dem Kautschuk in Berührung kommenden Metallteile auszuschalten und dabei eine vergleichsweise gute Kühlung herbeizuführen. Im übrigen zeigen sich besonders gute Ergebnisse dann, wenn der Innenraum des stempellosen Kneters derart mit der trockenen Luft beaufschlagt wird, dass er unter einem geringen Überdruck steht.

Zudem kann aber auch der bekannte Vorschlag benutzt werden, den Überführungskanal zwischen dem Grundmischer und dem stempellosen Kneter im wesentlichen luftdicht auszuführen, um so die gewünschte Luftbeschickung des stempellosen Kneters durchzuführen und darüber hinaus die Umgebung des Mischaggregates von der trockenen Luft unbeeinflusst zu lassen. Schliesslich kann sogar ein Vorhang eingesetzt werden, der den vorerwähnten Kanal ersetzen soll. Er soll die Verbindung zwischen dem Ausgang des Grundmischers und dem Eingang des stempellosen Kneters abschirmen und ungewünschte Luftzirkulationen unterbinden.

Alle diese Massnahmen führen zu einer Qualitätsverbesserung der Gummimischung, deren Herstellung im Falle eines Flüssigkeitsfilms zumindest erschwert, wenn nicht unter extremen Bedingungen sogar unmöglich gemacht würde.

Weitere Einzelheiten der Erfindung werden anhand der Zeichnung erläutert, in der ein Ausführungsbeispiel der Erfindung dargestellt ist.

Es zeigen :
- Fig. 1: eine Vorrichtung zur Durchführung des erfindungsgemässen Verfahrens im senkrechten Schnitt und
- Fig. 2: die Vorrichtung gemäss Fig. 1 in der Seitenansicht, und zwar ebenfalls im Schnitt.

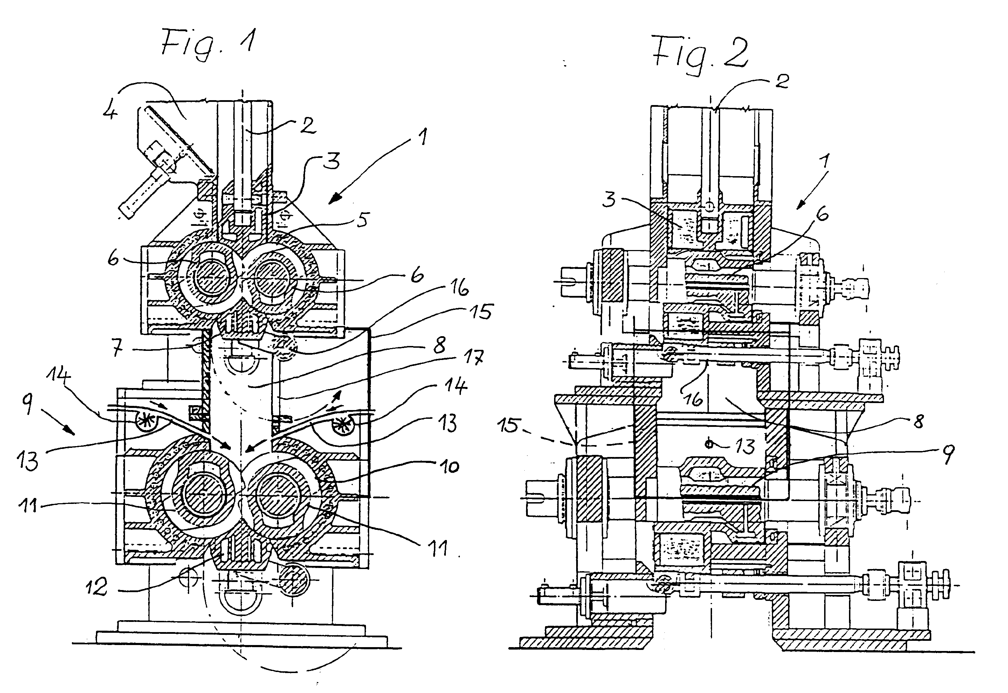

Der hoch oben angeordnete Stempelkneter 1 hat einen mittels Kolbenstange 2 anhebbar- und absenkbaren Stempel 3, der zum Beschicken des Stempelkneters 1 nach oben gefahren wird, um die Einfüllöffnung freizumachen. Der Speisetrichter 4 wird beschickt; damit gelangen die Grundmischung und in bemessener Menge weiterhin die Zusatzstoffe in die Mischkammer 5. Nach der Beschickung wird der Stempel 3 zum Verschliessen der Mischkammer 5 abgesenkt. Das Vermischen erfolgt durch Drehen der beiden in der Mischkammer 5 befindlichen Rotoren 6.

Nach Fertigstellung der Grundmischung wird der die Mischkammer 5 nach unten hin abschliessende Sattel 7 nach unten hin zur Seite abgeklappt, damit die Grundmischung unmittelbar austreten und über einen senkrechten Kanal 8 in die Öffnung des genau unterhalb des Grundmischers 1 befindlichen,stempellosen und somit oben stets offenen Kneters 9 mit der Mischkammer 10 und darin ebenfalls vorhandenen Rotoren 11 gelangen kann. Die Mischkammer 10 ist jedoch grösser als die Mischkammer 5; zudem wird der stempellose Kneter 9 im Vergleich zum Kneter 1 mit einer geringeren Drehzahl betrieben und auch so gefahren, dass eine Abkühlung des Mischgutes eintritt und unter geringerer Temperatur die reaktiven Zusatzstoffe über eine nicht näher dargestellte ggfs. verschliessbare Öffnung beigegeben werden können.

Nach Fertigstellung der Gummimischung wird der Klappsattel 12 des stempellosen Kneters 9 nach unten geklappt; die Fertigmischung kann dann nach unten z.B. auf eine Schnecke entweichen.

Nahe oberhalb der Eintrittsöffnung der Mischkammer 10 münden in diese Kanäle 13 zum Einleiten getrockneter Luft, die durch Ventilatoren 14 gefördert werden kann.

Wird die Mischkammer 10 z.B. mit Wasser einer Temperatur von etwa 5° C gekühlt und stellt sich dementsprechend eine Mischkammertemperatur ein, so muss der Taupunkt der eingeleiteten Luft unter 5° C liegen, damit eine Taubildung innerhalb der Mischkammer 10 unterbleibt und die Bildung eines Kondensationsniederschlages, der die Mischungsherstellung gefährden würde, vermieden werden.

Um den Sattel 7 mit seiner waagerechten Schwenkachse 16 zur Öffnung des Stempelkneters 1 seitlich nach unten schwenken zu können, und zwar durch die Öffnung bei 17, sind diese und der herausgeschwenkte Sattel 7 durch einen rucksackartigen Aufsatz 15 über- und abgedeckt, damit der Überführungskanal 8 zumindest im wesentlichen luftdicht ausgeführt werden kann.

## Patentansprüche

1. Verfahren zur Herstellung von Kautschukmischungen, bei dem in einer ersten Stufe in einem Stempelkneter (1) aus Kautschuk und nicht reaktiven Zusatzstoffen chargenweise eine Grundmischung hergestellt und die Grundmischung in einer zweiten Stufe ohne Zwischenlagerung unter Zufügen von reaktiven Zusatzstoffen ebenfalls chargenweise zum Fertigmischen und Abkühlen in einen stempellosen Kneter (9) überführt wird, dadurch gekennzeichnet, daß der Innenraum (10) des stempellosen Kneters (9) mit Luft beschickt wird, die einen einen Kondensationsniederschlag praktisch vermeidenden Trockenheitsgrad aufweist.

2. Verfahren nach Anspruch 1, dadurch gekennzeichnet, daß der stempellose Kneter (9) mit einem Kühlmedium einer Temperatur von etwa 0 - 10° C betrieben wird.

3. Verfahren nach Anspruch 1, dadurch gekennzeichnet, daß die Luft in den zwischen Austritt des Stempelkneters (1) und der Mischkammer (10) des stempellosen Kneters (9) befindlichen Kanal (8) eingeführt wird.

4. Vorrichtung zur Durchführung des Verfahrens nach Anspruch 1 mit einem chargenweise arbeitenden Stempelkneter (1) als Grundmischer und einem nachgeordneten, ebenfalls chargenweise arbeitenden Kneter (9) als Fertigmischer, wobei der Stempelkneter (1) ein zum Entleeren dienendes, ausschwenkbares, unteres Verschlußelement (7) aufweist, dadurch gekennzeichnet, daß zur Bildung eines Übergangskanals im Übergangsbereich zwischen dem stempellosen Kneter (9) und dem darüber befindlichen Stempelkneter (1) eine Abdeckung (15) für das ausschwenkbare untere Verschlußelement (7) vorgesehen ist, und zwar in der Weise, daß sich das in der Ruhestellung befindliche Verschlußelement (7) (Offenstellung) innerhalb des zumindest im wesentlichen luftdichten Kanals (8) befindet.

5. Vorrichtung zur Durchführung des Verfahrens nach Anspruch 1 mit einem chargenweise arbeitenden Stempelkneter (1) als Grundmischer und einem nachgeordneten, ebenfalls chargenweise arbeitenden Kneter (9) als Fertigmischer, dadurch gekennzeichnet, daß der Übergangsbereich zwischen dem Austritt des Stempelkneters (1) und dem Eintritt des stempellosen Kneters (9) von einem aus biegsamem Werkstoff bestehenden Vorhang begrenzt ist.

6. Vorrichtung zur Durchführung des Verfahrens nach Anspruch 1 und 3 mit einem chargenweise arbeitenden Stempelkneter (1) als Grundmischer und einem nachgeordneten, ebenfalls chargenweise arbeitenden Kneter (9) als Fertigmischer, dadurch gekennzeichnet, daß zwischen dem Austritt des Stempelkneters (1) und der Mischkammer (10) des stempellosen Kneters (9) ein Kanal (8) angeordnet ist, der mit zwei oder mehreren, ggfs. verschließbaren Luftzuführungskanälen (13) versehen ist.

## Claims

1. Method of producing rubber mixtures, wherein a basic mixture is produced chargewisely from rubber and non-reactive additional substances in a ram-type masticator (1) in a first stage, and the basic mixture is likewise chargewisely transferred into a ramless masticator (9) for final mixing and cooling in a second stage without any interposition by the addition of reactive additional substances, characterised in that the interior (10) of the ramless masticator (9) is charged with air having a degree of dryness which practically avoids a condensation precipitate.

2. Method according to claim 1, characterised in that the ramless masticator (9) is operated by a cooling medium having a temperature of substantially 0 - 10° C.

3. Method according to claim 1, characterised in that the air is introduced into the duct (8), which is situated between the outlet of the ram-type masticator (1) and the mixing chamber (10) of the ramless masticator (9).

4. Apparatus for accomplishing the method according to claim 1, having a chargewisely operating ram-type masticator (1) as the basic mixer and a subsequently disposed masticator (9) as the final mixer, which also operates chargewisely, the ram-type masticator (1) comprising an outwardly pivotable, lower closure element (7), which is used for emptying purposes, characterised in that, in order to form a transition duct in the transitional region between the ramless masticator (9) and the ram-type masticator (1) situated thereabove, a covering (15) is provided for the outwardly pivotable lower closure element (7) in such a manner that the closure element (7), situated in its inoperative position (open position), is situated internally of the duct (8), which is at least substantially air-tight.

5. Apparatus for accomplishing the method according to claim 1, having a chargewisely operating ram-type masticator (1) as the basic mixer and a subsequently disposed masticator (9) as the final mixer, which also operates chargewisely, characterised in that the transitional region between the outlet of the ram-type masticator (1) and the inlet of the ramless masticator (9) is defined by a curtain formed from flexible material.

6. Apparatus for accomplishing the method according to claims 1 and 3, having a chargewisely operating ram-type masticator (1) as the basic mixer and a subsequently disposed masticator (9) as the final mixer, which also operates chargewisely, characterised in that a duct (8) is disposed between the outlet of the ram-type masticator (1) and the mixing chamber (10) of the ramless masticator (9, which duct is provided with two or more, possibly closable, air supply ducts (13).

## Revendications

1. Procédé pour fabriquer des mélanges de caoutchouc, selon lequel, lors d'une première étape, on fabrique de façon discontinue un mélange de base à partir d'un caoutchouc et de substances additives non réactives, dans un malaxeur à piston (1), et, lors d'une seconde étape, le mélange de base est transféré, sans stockage intermédiaire et moyennant l'adjonction de substances additives réactives, et ce également de façon discontinue pour obtenir le mélange terminal et pour exécuter le refroidissement, dans un malaxeur sans piston (9), caractérisé en ce que l'espace intérieur (10) du malaxeur sans piston (9) est chargé par de l'air qui possède un degré de siccité qui évite pratiquement un dépôt par condensation.

2. Procédé selon la revendication 1, caractérisé en ce que le malaxeur sans piston (9) fonctionne avec un milieu de refroidissement possédant une température d'environ 0-10°C.

3. Procédé selon la revendication 1, caractérisé en ce que l'air est introduit dans le canal (8) qui est situé entre la sortie du malaxeur à piston (1) et la chambre de mélange (10) du malaxeur sans piston (9).

4. Dispositif pour la mise en oeuvre du procédé selon la revendication 1 comportant un malaxeur à piston (1) travaillant de façon discontinue, en tant que mélangeur de base, et un malaxeur (9) monté en aval et travaillant également de façon discontinue, en tant que mélangeur terminal, le malaxeur à piston (1) possédant un élément inférieur de fermeture (7) utilisé pour le vidage et qui peut être écarté par basculement, caractérisé en ce que pour la formation d'un canal de transfert, dans la zone de transfert entre le malaxeur sans piston (9) et le malaxeur à piston (1), situé au-dessus du précédent, est prévu un capot (15) pour l'élément inférieur de fermeture (7) apte à basculer, et ce de telle sorte que l'élément de fermeture (7) situé dans la position de repos (position ouverte) est situé à l'intérieur du canal (8) au moins pour l'essentiel étanche à l'air.

5. Dispositif pour la mise en oeuvre du procédé selon la revendication 1, comportant un malaxeur à piston (1) travaillant de façon discontinue, en tant que mélangeur de base, et un malaxeur (9) installé en amont et travaillant également de façon discontinue, en tant que mélangeur final, caractérisé en ce que la zone de transfert entre la sortie du malaxeur à piston (1) et l'entrée du malaxeur sans piston (9) est limitée par un rideau constitué par une matière flexible.

6. Dispositif pour la mise en oeuvre du procédé selon les revendications 1 et 3, comportant un malaxeur à piston (1) travaillant de façon discontinue, en tant que mélangeur de base, et un malaxeur (9) disposé en aval et travaillant également de façon discontinue, en tant que mélangeur final, caractérisé en ce qu'entre la sortie du malaxeur à piston (1) et la chambre de mélange (10) du malaxeur sans piston (9) est disposé un canal (8), qui comporte deux ou plusieurs canaux d'adduction d'air (13), qui peuvent être éventuellement fermés.
